(19) **Europäisches Patentamt European Patent Office Office européen des brevets**

(11) **EP 4 693 921 A1**

(12) **EUROPEAN PATENT APPLICATION**
published in accordance with Art. 153(4) EPC

(43) Date of publication:
**11.02.2026 Bulletin 2026/07**

(21) Application number: **24785136.3**

(22) Date of filing: **01.04.2024**

(51) International Patent Classification (IPC):
*H04B 7/0417* (2017.01)      *H04B 7/06* (2006.01)
*H04B 17/318* (2015.01)      *H04B 17/336* (2015.01)
*H04W 8/24* (2009.01)      *H04W 24/08* (2009.01)
*H04W 24/10* (2009.01)      *H04L 5/00* (2006.01)
*G06N 20/00* (2019.01)

(52) Cooperative Patent Classification (CPC):
**G06N 20/00; H04B 7/0417; H04B 7/06;
H04B 17/318; H04B 17/336; H04L 5/00;
H04W 8/24; H04W 24/08; H04W 24/10**

(86) International application number:
**PCT/KR2024/004165**

(87) International publication number:
**WO 2024/210430 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023 KR 20230045551**

(71) Applicant: **LG Electronics Inc.
Yeongdeungpo-gu
Seoul 07336 (KR)**

(72) Inventors:
• **KANG, Jiwon
  Seoul 06772 (KR)**
• **PARK, Haewook
  Seoul 06772 (KR)**
• **YOO, Junhyuk
  Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **METHOD AND APPARATUS FOR REPORTING CONFIDENCE INFORMATION IN WIRELESS COMMUNICATION SYSTEM**

(57)      Disclosed are a method and an apparatus for reporting confidence information in a wireless communication system. The method according to an embodiment of the present disclosure may comprise the steps of: transmitting capability information of a terminal to a base station; receiving, from the base station, configuration information related to a report on one or more beam-related reference signals (RSs); receiving the one or more beam-related RSs from the base station; and on the basis of the configuration information and the one or more beam-related RSs, transmitting, to the base station, beam-related report information based on prediction. Here, confidence-related information regarding the prediction may be included in at least one of the capability information and the beam-related report information.

EP 4 693 921 A1

FIG.18

```
              ┌─────────┐
              │  START  │
              └────┬────┘
                   │
                   ▼
   ┌───────────────────────────────────┐      S1810
   │  Transmit capability information of UE │
   └───────────────┬───────────────────┘
                   │
                   ▼
   ┌───────────────────────────────────┐      S1820
   │     Receive configuration information  │
   │  related to report for beam related RS │
   └───────────────┬───────────────────┘
                   │
                   ▼
   ┌───────────────────────────────────┐      S1830
   │        Receive beam related RS         │
   └───────────────┬───────────────────┘
                   │
                   ▼
   ┌───────────────────────────────────┐
   │     Transmit beam related report        │   S1840
   │   information based on prediction,      │
   │  based on configuration information     │
   │        and beam related RS             │
   └───────────────┬───────────────────┘
                   │
                   ▼
              ┌─────────┐
              │   END   │
              └─────────┘
```

**Description**

[Technical Field]

The present disclosure relates to a wireless communication system, and more particularly, to a method and apparatus for reporting confidence information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical object of the present disclosure is to provide a method and apparatus for reporting confidence information in a wireless communication system.

Specifically, the technical object of the present disclosure is to provide a method and device for reporting confidence/probability information regarding predicted information and/or the output of artificial intelligence (AI)/machine learning (ML) model inference in a wireless communication system.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may comprise: transmitting, to a base station, capability information of the UE; receiving, from the base station, configuration information related to reporting on one or more beam-related reference signals (RS); receiving, from the base station, the one or more beam-related RS; and transmitting, to the base station, beam-related reporting information based on a prediction, based on the configuration information and the one or more beam-related RS. Herein, confidence-related information for the prediction may be included in at least one of the capability information or the beam-related reporting information.

A method performed by a base station in a wireless communication system according to an additional aspect of the present disclosure may comprise: receiving, from a user equipment (UE), capability information of the UE; transmitting, to the UE, configuration information related to reporting on one or more beam-related reference signals (RS); transmitting, to the UE, the one or more beam-related RS; and receiving, from the UE, beam-related reporting information based on a prediction, based on the configuration information and the one or more beam-related RS. Herein, confidence-related information for the prediction may be included in at least one of the capability information or the beam-related reporting information.

[Technical Effects]

According to an embodiment of the present disclosure, a method and apparatus for reporting confidence/probability information in a wireless communication system may be provided.

According to an embodiment of the present disclosure, a method and apparatus for reporting confidence/probability information for predicted information and/or the output of artificial intelligence (AI)/machine learning (ML) model inference in a wireless communication system may be provided.

According to an embodiment of the present disclosure, by allowing a terminal to provide various levels of confidence/probability information to a network, the network can efficiently utilize information received from the terminal, resulting in the technical effect.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a classification of artificial intelligence.

FIG. 8 illustrates a feed-forward neural network.

FIG. 9 illustrates a recurrent neural network.

FIG. 10 illustrates a convolutional neural network.

FIG. 11 illustrates an auto encoder.

FIG. 12 illustrates a functional framework for an AI operation.

FIG. 13 is a diagram illustrating split AI inference.

FIG. 14 illustrates an application of a functional framework in a wireless communication system.

FIG. 15 illustrates an application of a functional framework in a wireless communication system.

FIG. 16 illustrates an application of a functional framework in a wireless communication system.

FIG. 17 illustrates a signaling procedure between a network and a user equipment for a confidence information reporting method according to an embodiment of the present disclosure.

FIG. 18 is a diagram illustrating the operation of a user equipment for a confidence information reporting method according to an embodiment of the present disclosure.

FIG. 19 is a diagram illustrating the operation of a base station for a confidence information reporting method according to an embodiment of the present disclosure.

FIG. 20 is a block diagram illustrating a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

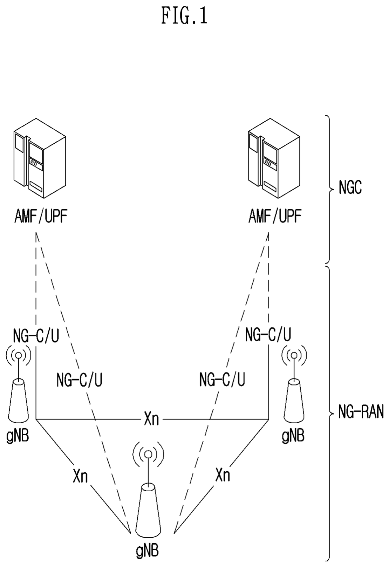

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

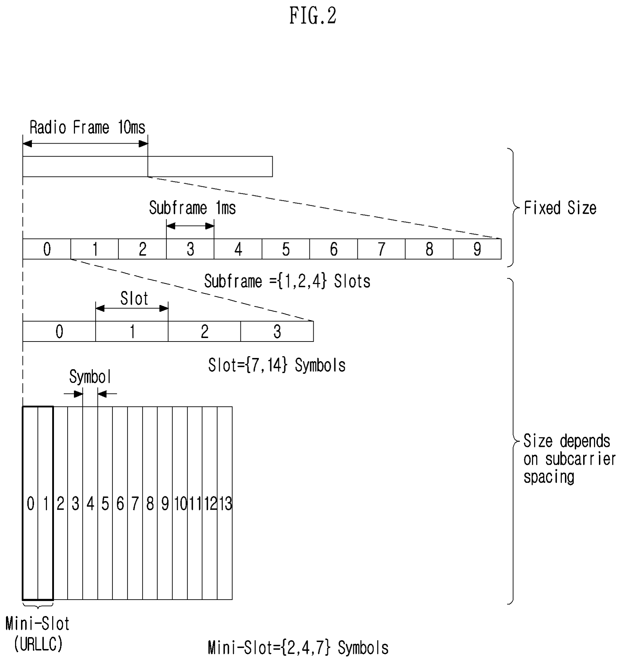

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and Nr is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

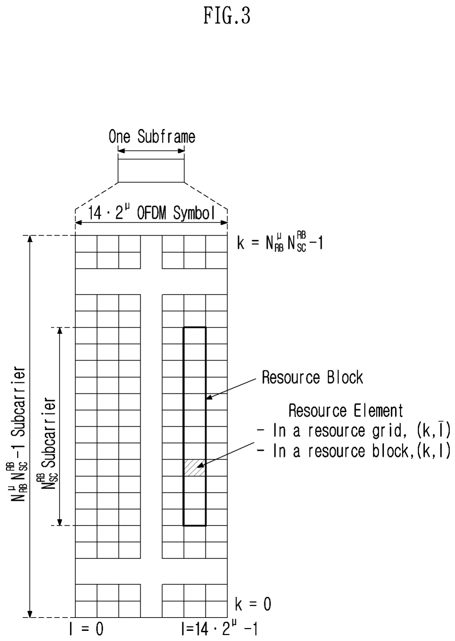

FIG. 3 illustrates a resource grid in a wireless communication system to which the present disclosure may be applied.

In reference to FIG. 3, it is illustratively described that a resource grid is configured with $N_{RB}^\mu N_{sc}^{RB}$ subcarriers in a frequency domain and one subframe is configured with $14 \cdot 2^\mu$ OFDM symbols, but it is not limited thereto. In an NR system, a transmitted signal is described by OFDM symbols of $2^\mu N_{symb}^{(\mu)}$ and one or more resource grids configured with $N_{RB}^\mu N_{sc}^{RB}$ subcarriers. Here, $N_{RB}^\mu \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^\mu N_{sc}^{RB}-1$ is an index in a frequency domain and $l'=0,...,2^\mu N_{symb}^{(\mu)}-1$ refers to a position of a symbol in a subframe. When referring to a resource element in a slot, an index pair (k,l) is used. Here, $l=0,...,N_{symb}^\mu-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu}= \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

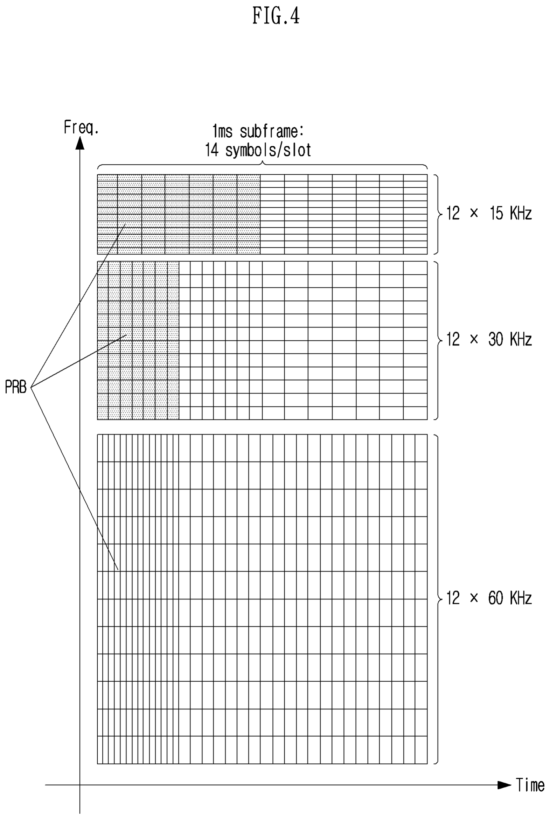

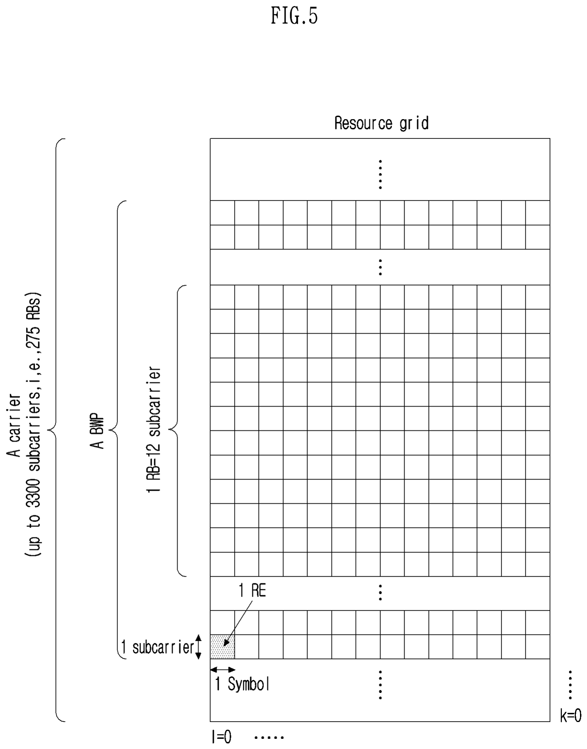

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

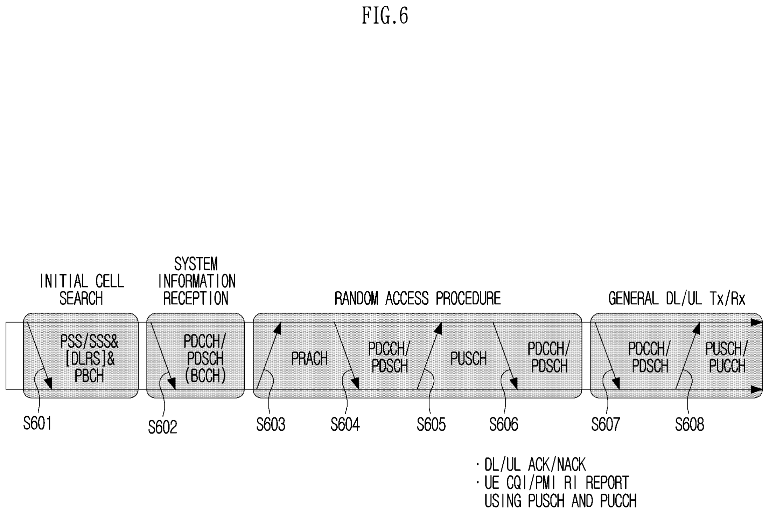

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

The AI-related descriptions and operations described below can be applied in combination with the methods proposed in the present disclosure described later, or can be supplemented to clarify the technical features of the methods proposed in the present disclosure.

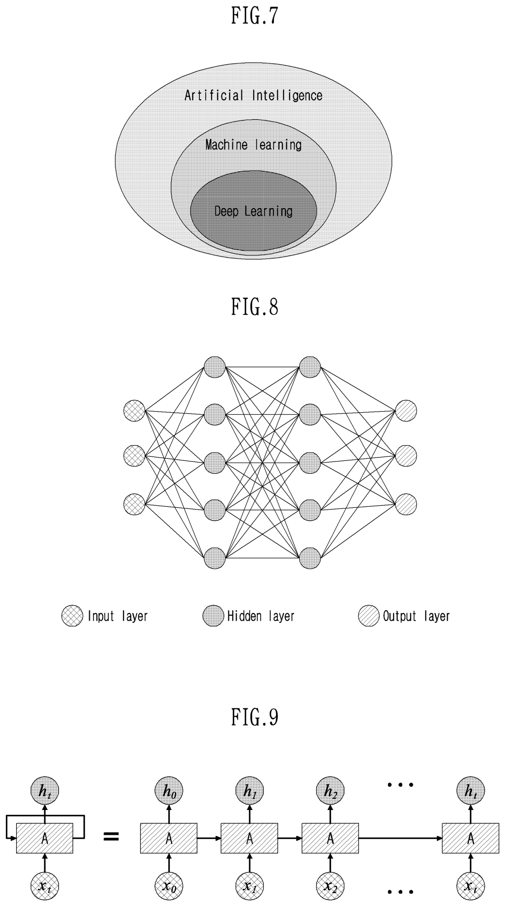

FIG. 7 illustrates a classification of artificial intelligence.

Referring to FIG. 7, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning

Offline learning follows a sequential procedure of database collection, learning, and prediction. In other words, collection and learning can be performed offline, and the completed program can be installed in the field and used for prediction work. For offline learning, the system does not learn incrementally, the learning is performed using all available collected data and applied to the system without further learning. If learning about new data is necessary, learning can begin again using all new data.

b) Online Learning

This refers to a method of gradually improving performance by incrementally additional learning with data generated in real time, recently, by taking advantage of the fact that data that can be used for learning continues to be generated through the Internet, Learning is performed in real time for each (bundle) of specific data collected online, allowing the system to quickly adapt to changing data.

Only online learning is used to build an AI system, so learning may be performed only with data generated in real time, or after offline learning is performed using a predetermined data set, additional learning may be performed using additional real-time data (online + offline learning).

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.

- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.

Hereinafter, representative models of deep learning will be exemplified.

FIG. 8 illustrates a feed-forward neural network.

A feed-forward neural network (FFNN) is composed of an input layer, a hidden layer, and an output layer.

In FFNN, information is transmitted only from the input layer to the output layer, and if there is a hidden layer, it passes through it.

FIG. 9 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 9, A represents a neural network, $x_t$ represents an input value, and $h_t$ represents an output value. Here, $h_t$ may refer to a state value representing the current state based on time, and $h_{t-1}$ may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

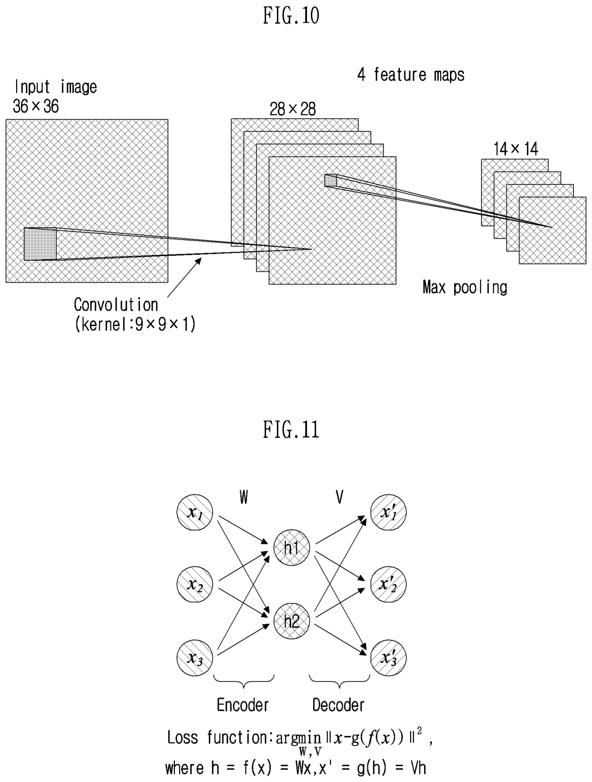

FIG. 10 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

FIG. 11 illustrates an auto encoder.

Auto encoder refers to a neural network that receives a feature vector x (x1, x2, x3, ...) as input and outputs the same or similar vector x' (x' 1, x'2, x'3, ...)".

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 11 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.
- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

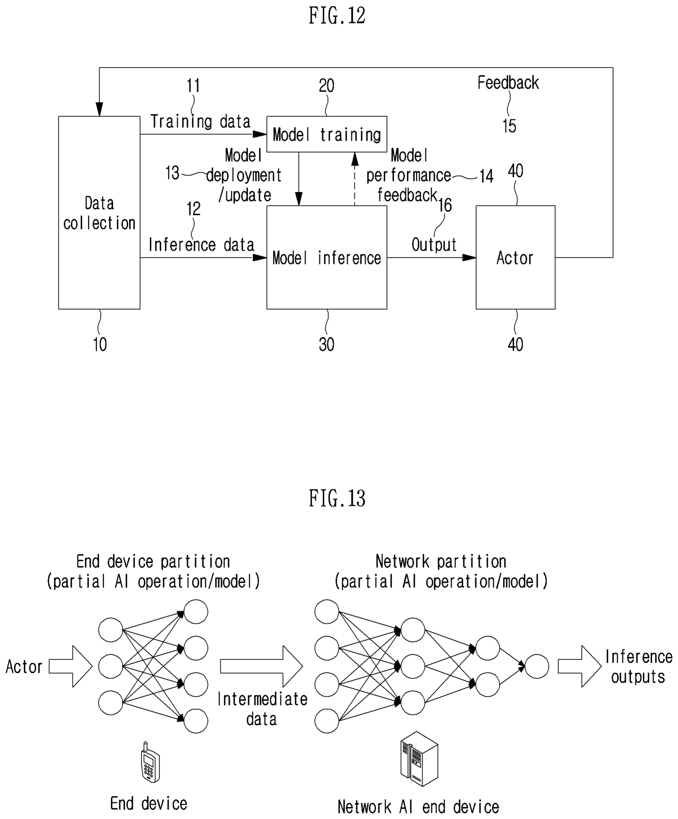

FIG. 12 illustrates a functional framework for an AI operation.

Referring to Figure 12, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 12 may be implemented in a RAN node (e.g., base station, TRP, base station central unit (CU), etc.), a network node, a network operator's operation administration maintenance (OAM), or a UE.

Alternatively, the function illustrated in FIG. 12 may be implemented through cooperation of two or more entities among a RAN, a network node, an OAM of network operator, or a UE. For example, one entity may perform some of the functions of FIG. 12 and other entities may perform the remaining functions. As such, as some of the functions illustrated in FIG. 12 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment/Update (13) and Model Performance Feedback (14) can be omitted.

Alternatively, any one of the functions illustrated in FIG. 12 may be performed through collaboration between two or more entities among a RAN, a network node, an OAM of a network operator, or a UE. This can be referred to as a split AI operation.

FIG. 13 is a diagram illustrating split AI inference.

FIG. 13 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

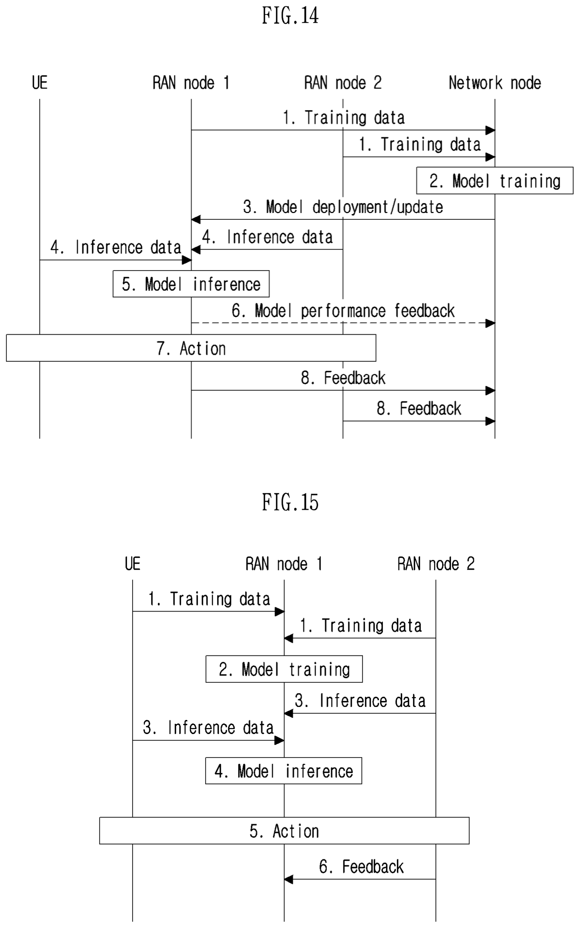

FIG. 14 illustrates an application of a functional framework in a wireless communication system.

FIG. 14 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 15 illustrates an application of a functional framework in a wireless communication system.

FIG. 15 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

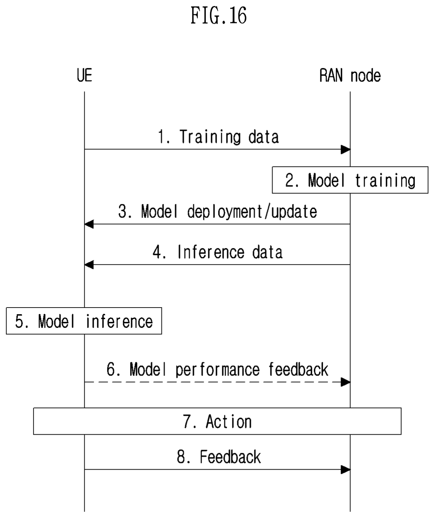

FIG. 16 illustrates an application of a functional framework in a wireless communication system.

FIG. 16 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs).

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A UE may be configured at list of up to M TCI-State configurations in a higher layer parameter PDSCH-Config to decode a PDSCH according to a detected PDCCH having intended DCI for a corresponding UE and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Method for reporting confidence/probability for AI/ML model utilization

In the present disclosure, "/" may mean "and," "or," or "and/or," depending on the context.

The "beam" described in the present disclosure may mean a source reference signal (source RS) for a "spatial filter" or a "spatial relation," and may be interpreted as a QCL (type-D) RS, a TCI state, or a spatial relation RS (in the case of uplink).

In this regard, a beam indication method in an existing wireless communication system may correspond to a method of indicating a source/reference RS to be used for transmission and/or reception of a target RS/channel (e.g., CRI, SSBRI, etc.) by a beam RS ID.

Specifically, in the case of a DL beam indication method, a BS may designate, to a UE, a QCL source RS for a target RS/channel from the viewpoint of a spatial Rx parameter, as a specific CSI-RS resource or an SSB resource (e.g., a QCL type-D RS). In this regard, the UE receiving the indication may receive the target RS/channel using a beam used for reception of the source RS.

In the case of a UL beam indication method, a BS may designate, to a UE, a source RS for a target RS/channel from the perspective of a spatial parameter, as a specific CSI-RS resource, an SSB resource, or an SRS resource (e.g., a spatial relation RS). In this regard, when the source RS is a DL RS (e.g., CSI-RS, SSB), the UE receiving the indication may transmit a target UL RS/channel using a Tx beam corresponding to an Rx beam used for reception of the DL RS. In contrast, when the source RS is a UL RS (e.g., SRS), the UE receiving the indication may transmit a target UL RS/channel using a Tx beam used for transmission of the UL RS.

In this regard, a DL beam RS (e.g., a QCL type-D RS) may be indicated as included in a DL TCI state, and a UL beam RS (e.g., a spatial relation RS) may be indicated as included in a UL TCI state.

Additionally, in the case of a UE in which a (one-to-one) correspondence relation between a Tx beam and an Rx beam is established, a source RS for a DL beam and a UL beam may be the same DL RS (e.g., a CSI-RS, SSB) resource, and a joint DL/UL TCI state for integrally indicating this may be configured/indicated.

For clarity of description, in the present disclosure, the above-described method of indicating a TCI state/QCL/-spatial relation RS is referred to as "beam indication."

In a next-generation wireless communication system, a method of utilizing an AI/ML model for an air interface may be considered. For example, in a wireless communication system, an AI/ML model may be applied in beam management, CSI reporting, positioning, and mobility.

In the present disclosure, although a method of reporting confidence/probability information is described using a beam management method as a representative example, the method may also be similarly/identically extended and applied to other methods in which an AI/ML model is utilized (e.g., CSI reporting, positioning, mobility, etc.).

In the case of enhanced beam management based on utilization of an AI/ML model, enhancement in two aspects, namely "enhancement of beam management performance through spatial beam prediction" and "enhancement of beam management performance through temporal beam prediction," may be considered.

Specifically, "enhancement of beam management performance through spatial beam prediction" may be for a UE's AI/ML model and/or a network's (e.g., BS's) AI/ML model to achieve enhanced beam management accuracy with lower RS overhead, based on current/past beam RS measurement results, location/mobility information of the UE, etc. As an example, an AI/ML model may be utilized for the purpose of achieving beam selection performance using a larger number of beam RSs, based on results measured using a smaller number of beam RSs.

In contrast, "enhancement of beam management performance through temporal beam prediction" may be for a UE's AI/ML model and/or a network's (e.g., BS's) AI/ML model to predict beam quality at subsequent time instance(s), based on current/past beam RS measurement results, location/mobility information of the UE, and time-varying characteristics of a channel.

Table 6 illustrates methods related to beam management based on the above-described AI/ML model.

[Table 6]

| |
|---|
| For AI/ML-based beam management, support BM-Case1 and BM-Case2 for characterization and baseline performance evaluations |

(continued)

- BM-Case1: Spatial-domain DL beam prediction for Set A of beams based on measurement results of Set B of beams

- BM-Case2: Temporal DL beam prediction for Set A of beams based on the historic measurement results of Set B of beams (For BM-Case1 and BM-Case2, Beams in Set A and Set B can be in the same Frequency Range)

Regarding the sub use case BM-Case2, the measurement results of K (K>=1) latest measurement instances are used for AI/ML model input.

Regarding the sub use case BM-Case2, AI/ML model output should be F predictions for F future time instances, where each prediction is for each time instance (At least F = 1).

For the sub use case BM-Case1 and BM-Case2, both AI/ML inference at NW side and AI/ML inference at UE side can be cosidered.

For the sub use case BM-Case1, consider the following alternatives for further study:

- Alt.1: Set B is a subset of Set A

-- FFS: the number of beams in Set A and B

-- FFS: how to determine Set B out of the beams in Set A (e.g., fixed pattern, random pattern, ...)

- Alt.2: Set A and Set B are different (e.g. Set A consists of narrow beams and Set B consists of wide beams)

-- FFS: the number of beams in Set A and B

-- FFS: QCL relation between beams in Set A and beams in Set B

-- FFS: construction of Set B (e.g., regular pre-defined codebook, codebook other than regular pre-defined one) (Set A is for DL beam prediction and Set B is for DL beam measurement.)

Regarding the sub use case BM-Case1, further study the following alternatives for AI/ML input:

- Alt.1: Only L1-RSRP measurement based on Set B

- Alt.2: L1-RSRP measurement based on Set B and assistance information

-- FFS: Assistance information. The following were mentioned by companions in the discussion: Tx and/or Rx beam shape information (e.g., Tx and/or Rx beam pattern, Tx and/or Rx beam boresight direction (azimuth and elevation), 3dB beamwidth, etc.), expected Tx and/or Rx beam for the prediction (e.g., expected Tx and/or Rx angle, Tx and/or Rx beam ID for the prediction), UE position information, UE direction information, Tx beam usage information, UE orientation information, etc.

(The provision of assistance information may be infeasible due to the concern of disclosing proprietary information to the other side.)

- Alt.3: CIR based on Set B

- Alt.4: L1-RSRP measurement based on Set B and the corresponding DL Tx and/or Rx beam ID

For the sub use case BM-Case2, further study the following alternatives with potential down-selection:

- Alt.1: Set A and Set B are different (e.g. Set A consists of narrow beams and Set B consists of wide beams)

-- FFS: QCL relation between beams in Set A and beams in Set B

- Alt.2: Set B is a subset of Set A (Set A and Set B are not the same)

-- FFS: how to determine Set B out of the beams in Set A (e.g., fixed pattern, random pattern, ...)

- Alt.3: Set A and Set B are the same (Predicted beam(s) are selected from Set A and measured beams used as input are selected from Set B.)

Regarding the sub use case BM-Case2, further study the following alternatives of measurement results for AI/ML input (for each past measurement instance):

- Alt.1: Only L1-RSRP measurement based on Set B

- Alt 2: L1-RSRP measurement based on Set B and assistance information

-- FFS: Assistance information. The following were mentioned by companies in the discussion:, Tx and/or Rx beam angle, position information, UE direction information, positioning-related measurement (such as Multi-RTT), expected Tx and/or Rx beam/occasion for the prediction (e.g., expected Tx and/or Rx beam angle for the prediction, expected occasions of the prediction), Tx and/or Rx beam shape information (e.g., Tx and/or Rx beam pattern, Tx and/or Rx beam pointing angles beam boresight directions (azimuth and elevation), 3dB beamwidth, etc.) , increase ratio of L1-RSRP for best N beams, UE orientation information (The provision of assistance information may be infeasible due to the concern of disclosing proprietary information to the other side.)

- Alt.3: L1-RSRP measurement based on Set B and the corresponding DL Tx and/or Rx beam ID

For the sub use case BM-Case1 and BM-Case2, Set B is a set of beams whose measurements are taken as inputs of the AI/ML model.

(continued)

For BM-Case1 with a UE-side AI/ML model, study the potential specification impact of L1 signaling to report the following information of AI/ML model inference to NW
- The beam(s) that is based on the output of AI/ML model inference
- Predicted L1-RSRP corresponding to the beam(s)
- other information
For BM-Case2 with a UE-side AI/ML model, study the potential specification impact of L1 signaling to report the following information of AI/ML model inference to NW
- The beam(s) of N future time instance(s) that is based on the output of AI/ML model inference
- Predicted L1-RSRP corresponding to the beam(s)
- Information about the timestamp corresponding the reported beam(s)
- other information
For BM-Case1 and BM-Case2 with a network-side AI/ML model, study potential specification impact on the following L1 reporting enhancement for AI/ML model inference
- UE to report the measurement results of more than 4 beams in one reporting instance
- Other L1 reporting enhancements can be considered
Regarding the data collection for AI/ML model training at UE side, study the potential specification impact considering the following additional aspects.
- Whether and how to initiate data collection
- Configurations, e.g., configuration related to set A and/or Set B, information on association/mapping of Set A and Set B
- Assistance information from Network to UE (If supported)
Regarding NW-side model monitoring for a network-side AI/ML model of BM-Case1 and BM-Case2, study the necessity and the potential specification impacts from the following aspects:
- UE reporting of beam measurement(s) based on a set of beams indicated by gNB
- Signaling, e.g., RRC-based, L1-based
Set B can be a subset of measured beams (pairs) Set C (including Set B = Set C), e.g. Top-K beams(pairs) of Set C.
For BM-Case1 and BM-Case2 with a UE-side AI/ML model, study the necessity, feasibility and the potential specification impact (if needed) of the following information reported from UE to network:
- Predicted L1-RSRP(s) corresponding to the DL Tx beam(s) or beam pair(s) (Whether/how to differentiate predicted L1-RSRP and measured L1-RSRP)
- Confidence/probability information related to the output of AI/ML model inference (e.g., predicted beams) (FFS: Definition/content of confidence/probability information)
For BM-Case1 and BM-Case2 with a UE-side AI/ML model, study potential specification impact of AI model inference from the following additional aspects on top of previous agreements:
- Indication of the associated Set A from network to UE, e.g., association/mapping of beams within Set A and beams within Set B if applicable
- Beam indication from network for UE reception

In Table 6, BM-Case1 corresponds to a case of performing only spatial beam prediction, and BM-Case2 corresponds to a case of performing temporal beam prediction together with spatial beam prediction, or a case of performing only temporal beam prediction.

Additionally, Set A refers to a beam RS set on which a UE or a network performs prediction, and Set B refers to a beam RS set utilized as an input to an AI/ML model for performing prediction based on Set A. Set C refers to a beam RS set measured by the UE, and Set B may be the same as Set C or may have a subset relationship with Set C.

For example, Set A may include 128 beams (e.g., a first beam RS (RS#0), a second beam RS (RS#1), ..., a 128th beam RS (RS#127)). A BS may transmit the beams of Set A to a UE in a relatively long period or in an on-demand manner. This may be utilized for purposes such as monitoring the performance of an AI/ML model of the UE or of an AI/ML model of the network.

For example, Set C may include 32 beams (e.g., including one out of every four beams from Set A, including a first beam RS (RS#0), a fifth beam RS (RS#4), a ninth beam RS (RS#8), ..., a 125th beam RS (RS#124)). A BS may transmit the beams of Set C to a UE periodically/aperiodically, and through this, the UE may perform measurement and related beam reporting. Here, in the case of beam reporting, the UE may select and report some beams from among the beams of Set A through spatial beam prediction.

For example, Set B may include a subset of Set C. Set B is a beam set actually utilized as an input to an AI/ML model, and (depending on aspects of model implementation) all beams of Set C may be used as inputs, or some beams of Set C may be used as inputs. As a specific example, as inputs to an AI/ML model, only best N beams may be used, or only beam(s) having a beam quality equal to or higher than a predetermined threshold may be used.

In relation to the above-described AI/ML model-based beam management, in particular, the present disclosure proposes a method of reporting predicted beam quality value(s) (e.g., predicted L1-RSRP value(s)/L1-SINR value(s)) and confidence/probability information regarding an output of AI/ML model inference, based on an AI/ML model of a UE.

When the information is reported, depending on accuracy/precision/probability of prediction based on the UE, a network (e.g., a BS, etc.) may be helped in determining whether to utilize reporting by the UE for actually determining/-changing a beam, and/or to what extent to utilize the reporting.

In the case of a beam reporting method in an existing WLAN system, a UE may be configured to transmit to a BS ID(s) (e.g., CRI(s), SSBRI(s), etc.) of up to four beam RSs together with quality value information (e.g., L1-RSRP value(s), L1-SINR value(s)) regarding the beam RSs.

Similarly, for the above-described BM-Case1 and/or BM-Case2, a method of reporting predicted quality value information (e.g., predicted L1-RSRP value(s)/L1-SINR value(s)) regarding beam RS(s) through spatial/temporal beam prediction together with ID(s) of the beam RS(s) may be considered. In particular, in the case of temporal beam prediction, a UE may be configured to report beam RS ID(s) for one or a plurality of specific future time point(s) and predicted quality value information thereof.

Hereinafter, specific examples will be described with respect to configuration of confidence/probability information proposed in the present disclosure and related procedures.

In the following description, for clarity of explanation, "confidence information" will be described as a representative example, but the method proposed in the present disclosure may be similarly/identically applied not only to "confidence information" but also to information regarding probability, accuracy, and the like.

Embodiment 1

The present embodiment relates to a method of configuring confidence information related to an AI/ML-based model and/or functionality.

For example, a value related to confidence/probability/accuracy of an output of an AI/ML-based model (e.g., a confidence level/percentage, an accuracy measure such as a mean square error) may be measured/calculated/tested/defined through various methods depending on configuration/purpose of the model. In this case, the value may be expressed as an absolute value or as a relative value (e.g., a value regarding how much higher/lower confidence is than a predicted value for a specific beam).

Hereinafter, with respect to an AI/ML-based model and/or functionality, methods of configuring confidence information by dividing it into various levels/units are proposed.

A UE may measure/calculate one or a plurality of pieces of information among levels of information described later, and may report the information to a network (e.g., a BS, etc.).

Embodiment 1-1

As first-level confidence information, model- and/or functionality-specific confidence information (i.e., confidence information at the level of the model and/or functionality) may be configured and reported.

In this regard, first-level confidence information may not vary even if input data (e.g., beam measurement) is changed. Additionally, first-level confidence information may be a value common to beam IDs (e.g., CRI, SSBRI) and/or predicted quality values (e.g., predicted L1-RSRP value, predicted L1-SINR value) reported by a UE.

The above-described first-level confidence information is confidence/accuracy information regarding the AI/ML-based model or related functionality itself. This information may be a value measured/calculated after training of the model is completed. Additionally or alternatively, this information may be a value measured/calculated when a specific test data set (e.g., RS resource(s) during a set/defined measurement window, RSRP value(s) for testing) is provided/configured by or measured from a network. For example, first-level confidence information may be a value derived by measuring a mean square error (MSE) value related to accuracy.

As described above, first-level confidence information may be a value regarding the confidence/accuracy of an AI/ML-based model/functionality and may be a value that does not change (as long as the test data set is not updated) and may not vary based on inference-related data (e.g., measured RSRP value(s)).

First-level confidence information may be reported to a network as a value per model/functionality (ID) implemented in the UE through UE capability information. Additionally or alternatively, first-level confidence information may be information reported together when the UE performs reporting related to variation of its model/functionality (e.g., reporting of activated/deactivated model/functionality ID) after reporting UE capability information to the network.

Additionally or alternatively, first-level confidence information may be information reported by a UE based on triggering by a BS. For example, when a BS triggers beam reporting by a UE, the BS may trigger/configure the UE to report first-level confidence information together.

Additionally or alternatively, first-level confidence information may be configured to be reported by a UE only when a variation of the value occurs above a certain level. That is, a UE may perform event-based reporting only when a variation above a certain level occurs for first-level confidence information. For example, when a variation of the value occurs, the UE may report the varied value to a network through certain signaling (e.g., MAC-CE, etc.).

Embodiment 1-2

As second-level confidence information, measurement-, data-, and/or report-specific confidence information (i.e., confidence information at the level of measurement, data, and/or report) may be configured and reported.

In this regard, second-level confidence information may be a value that may vary depending on input data (e.g., beam measurement) and/or a reporting (timing). Additionally, second-level confidence information may be a value common to beam IDs (e.g., CRI, SSBRI) and/or predicted quality values (e.g., L1-RSRP value, L1-SINR value) reported by a UE.

The above-described second-level confidence information is information in which a UE measures and reports confidence/accuracy for each measurement value, data, and/or related report that may be instantaneously updated for an AI/ML-based model or related functionality. Although this information is commonly applied to parameters/information output/reported like first-level confidence information, the difference is that confidence/accuracy may vary based on instantaneous measurement values/data.

As one example of configuring second-level confidence information, when a UE measures/calculates/reports a mean square error (MSE), the configuration may be set/defined such that the measurement window constituting the test data set is updated to include recent channel measurement values (e.g., L1-RSRP/SINR value(s)), thereby updating and reporting confidence/accuracy. In this case, a network (e.g., a BS) may provide correct answers for the test data (e.g., the best beam ID in Set A, actual RSRP values, etc.) or perform certain configurations/signaling (e.g., configuring/transmitting beams of Set A or some beams corresponding to correct answers in Set A) so that the UE may calculate the MSE by comparing predictions with the correct answers.

Since second-level confidence information is information that may be instantaneously updated, a UE may be configured/defined to report second-level confidence information together with, or separately from, CSI reporting information and/or beam reporting information based on a BS configuration/trigger.

Additionally or alternatively, second-level confidence information may be configured to be reported by a UE only when a variation of the value occurs above a certain level. That is, a UE may perform event-based reporting only when a variation above a certain level occurs for second-level confidence information. For example, when a variation of the value occurs, the UE may report the varied value to a network through certain signaling (e.g., MAC-CE, etc.)

Embodiment 1-3

As third-level confidence information, confidence information specific to reported parameters and/or information (i.e., confidence information at the level of reported parameters and/or information) may be configured and reported.

In this regard, third-level confidence information may be a value that may vary depending on input data (e.g., beam measurement) and/or reporting (timing).

Specifically, third-level confidence information may be configured as in the following examples.

- Example 1. Beam ID (e.g., CRI, SSBRI)-specific confidence information may be configured. In this case, a UE may measure/calculate/report the information per reported beam ID.
- Example 2. Beam quality (e.g., predicted L1-RSRP value, predicted L1-SINR value)-specific confidence information may be configured. In this case, a UE may measure/calculate/report the information per reported beam quality.
- Example 3. Beam ID and beam quality-specific confidence information may be configured. In this case, a UE may measure/calculate/report the information per combination of reported beam ID and beam quality.

The above-described third-level confidence information is information in which a UE measures and reports confidence/accuracy/probability per reported parameter and/or information for an AI/ML-based model or related functionality.

First, as in the above-described Example 1, a UE may measure/calculate/report confidence/probability information for each beam ID. When a UE is configured to report N beam IDs with high L1-RSRP among M beams, prediction accuracy/confidence/probability may differ for each of the beam IDs.

The method of configuring/deriving/calculating the information may vary depending on an AI/ML-based model algorithm and/or a post-processing method for model output.

As one example, after configuring each node of an output layer of a deep-learning algorithm per beam ID, the information may be configured/derived based on using an activation function that returns probability values (e.g., Sigmoid, Tanh, Softmax).

As another example, after configuring output nodes of a model with values related to beam angles rather than beam IDs, the information may be configured/derived when performing post-processing that maps the values to beam IDs. For example, when beams of Set A are configured with boresight angles differing by 10 degrees, a UE may be implemented such that the AI/ML-based model outputs in 1-degree units and maps to the closest beam ID through post-processing. Specifically, if the model outputs a beam angle of 32 degrees, it may be mapped to a beam ID corresponding to 30 degrees, and if the model outputs a beam angle of 36 degrees, it may be mapped to a beam ID corresponding to 40 degrees.

In the above-described implementation form, the accuracy/confidence of a layer may be distinguished depending on a difference between the output beam angle and the beam angle of the mapped beam ID. For example, the smaller the angle difference between the output and the beam ID, the higher the accuracy/confidence may be. For reference, to implement the above-described example, a BS may need to provide a UE with information regarding angles of beams and/or angular differences between beams.

Next, as in the above-described Example 2, a UE may measure/calculate/report confidence/probability information per beam quality value. When a UE is configured to report N beam IDs with high L1-RSRP among M beams and the corresponding predicted L1-RSRP values, prediction accuracy/confidence/probability may differ for each L1-RSRP value.

The method of configuring/deriving/calculating the information may vary depending on an AI/ML-based model algorithm and/or a post-processing method for model output.

As one example, when implementing a deep-learning algorithm, a UE may be configured to first select the best N beams, and then implement an L1-RSRP prediction algorithm separately or together for those beams. In this case, the output layer of the L1-RSRP prediction algorithm may be configured per L1-RSRP candidate value according to the L1-RSRP value table used for beam reporting, and confidence/probability information per L1-RSRP value may be configured/derived based on using an activation function that returns probability values (e.g., Sigmoid, Tanh, Softmax).

As another example, after configuring output nodes of a model with finer granularity than L1-RSRP candidate values, the information may be derived/calculated during post-processing that maps the values to L1-RSRP candidate values. For example, if L1-RSRP candidate values are configured at 1 dB intervals, an AI/ML-based model may be implemented to output predicted values in 0.1 dB intervals. During the post-processing process of matching predicted values to L1-RSRP candidate values, prediction accuracy/confidence may be distinguished based on the difference between the predicted values and candidate/reported values. For example, the smaller the difference between the output, i.e., the predicted value, and the candidate/reported value, the higher the accuracy/confidence may be.

Next, as in the above-described Example 3, a UE may measure/calculate/report confidence/probability information per combination of beam ID and beam quality value (e.g., L1-RSRP value). When a UE is configured to report N beam IDs with high L1-RSRP among M beams and the corresponding predicted L1-RSRP values, the UE may calculate/derive prediction accuracy/confidence/probability per [beam ID, predicted L1-RSRP value] combination and report it to a network.

The method of configuring/deriving/calculating the information may vary depending on an AI/ML-based model algorithm and/or a post-processing method for model output. For example, after configuring the output of an AI/ML-based model per [beam ID, L1-RSRP] combination, the information may be configured/derived based on using an activation function that returns probability values (e.g., Sigmoid, Tanh, Softmax).

Additionally or alternatively, as third-level confidence information, one or more values among the values described in Examples 1, 2, and 3 may be reported. For example, when a UE reports a beam ID together with a predicted L1-RSRP value, the UE may be configured to report both confidence/probability values per beam ID (i.e., information in Example 1) and confidence/probability values per L1-RSRP (i.e., information in Example 2).

This is because the probability that a selected/reported beam ID is actually among the best N beams and the accuracy/confidence/probability information for the predicted L1-RSRP value for that beam ID may differ. In particular, regarding the post-processing exemplified in the above-described Examples 1 and 2, the difference between the predicted beam angle and the angle corresponding to the selected beam ID and the difference between the predicted L1-RSRP value and the selected L1-RSRP candidate value may be values calculated/derived independently.

Embodiment 2

As described in Embodiment 1, regarding confidence information, the method of deriving/calculating related information for each level and for each example of each level (e.g., the above-described Example 1, Example 2, Example 3) may all be different. In particular, the configuration of AI/ML-based models to derive Example 1, Example 2, and Example 3 may differ.

Therefore, it may be difficult/highly complex for a UE to derive and report all such values, and there may be a need to inform a network which values can be derived/reported.

This embodiment relates to a method in which a UE reports to a network information on which of the various levels of information, i.e., the above-described first-level confidence information, second-level confidence information, and third-level confidence information, can be measured/calculated/reported.

A UE may report to a base station information on which level of values can be reported. For example, a UE may report such information through reporting of UE capability information. Upon receiving such information, the base station may adaptively perform settings (e.g., beam reporting configuration) related to the information for the UE.

For example, regarding third-level information, a UE may report to a base station information on which of the confidence information in Example 1, confidence information in Example 2, and/or confidence information in Example 3 can be measured/calculated/reported.

In this case, for a UE that supports only the confidence information of Example 1, the base station may configure the UE to report N combinations of [beam ID, L1-RSRP, confidence/probability information for the beam ID]. Additionally or alternatively, for a UE that supports only the confidence information of Example 2, the base station may configure the UE to report N combinations of [beam ID, L1-RSRP, confidence/probability information for L1-RSRP]. Additionally or alternatively, for a UE that supports both the confidence information of Example 1 and the confidence information of Example 2, the base station may configure the UE to report N combinations of [beam ID, L1-RSRP, confidence/probability information for the beam ID, confidence/probability information for L1-RSRP]. Additionally or alternatively, for a UE that supports the confidence information of Example 3, the base station may configure the UE to report N combinations of [beam ID, L1-RSRP, confidence/probability information for the [beam ID, L1-RSRP] combination].

The confidence, accuracy, probability, and related information proposed in the present disclosure may be expressed in various ways. For example, the information may be expressed as a percentage value, a (level) value within a certain numeric range (e.g., a natural number between 1 and 10), or a value corresponding to a level (e.g., selection among high/mid/low).

Although the method proposed in the present disclosure has been described with an AI/ML-based enhanced beam reporting method as a representative example, the method proposed in the present disclosure may be applied/utilized for other enhanced base station/UE implementations that are not AI/ML-based. Additionally, the method proposed in the present disclosure may be extended and applied to other (AI/ML-based) reporting methods that are not beam reporting. That is, the distinction and form of the first-level confidence information, second-level confidence information, and/or third-level confidence information may be applicable regardless of the content of the reported values (e.g., beam-related information, CSI-related information, positioning-related information, mobility-related information, etc.).

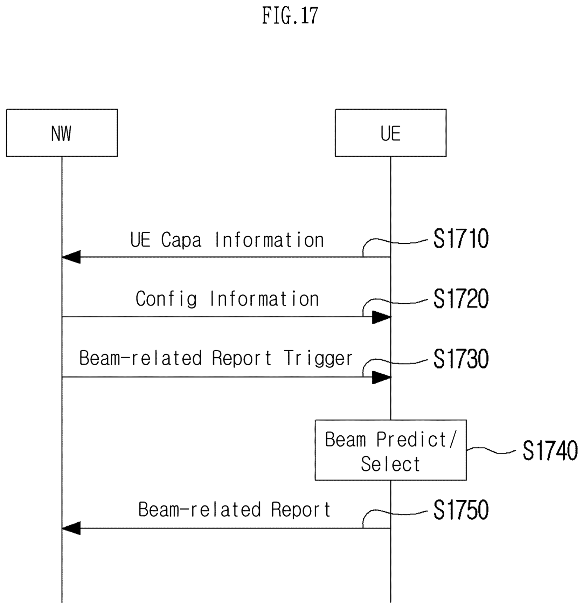

Hereinafter, regarding the above-described embodiments of the present disclosure, signaling between a UE and a network will be described with reference to FIG. 17.

FIG. 17 illustrates a signaling procedure between a network and a user equipment for a confidence information reporting method according to an embodiment of the present disclosure.

The example described with reference to FIG. 17 is for clarity of description and does not limit the scope of the present disclosure. Additionally, some of the steps shown in FIG. 17 may be omitted based on circumstances and/or configurations.

A UE may report UE capability information to a network (step S1710).

For example, the UE capability information may include reporting information related to the UE's AI/ML-based models (training/inference and/or functionality), information on whether beam prediction is possible/supported, and/or the like.

Additionally, as described above in the present disclosure, the UE capability information may include the above-described confidence information (e.g., first-level confidence information of Embodiment 1), and information on which of the various levels of information the UE can measure/calculate/report (e.g., reporting information of Embodiment 2).

The UE may receive configuration information from the network related to beam management and/or beam measurement (step S1720).

For example, the configuration information may include information regarding a beam RS set that is the target of prediction by the UE/network (e.g., a beam RS set corresponding to the above-described Set A), and information regarding a beam RS set used as input to the AI/ML-based model for performing prediction (e.g., a beam RS set corresponding to the above-described Set B). In this regard, the configuration information may include ID information for beams, transmission period and time/frequency location information, sequence information, information on relations between RSs (e.g., QCL presence, QCL-related information), and/or information on beam angles.

After receiving the configuration information related to beam management and/or beam measurement, or together with it, the network may transmit beam RS(s) for beam management and/or beam measurement (e.g., CSI-RS, SSB, etc.) to the UE. Additionally, the network may transmit information to the UE for triggering related beam reporting (step S1730).

A UE that has received the configuration information related to beam management and/or beam measurement and has performed measurement of the beams (i.e., measurement of beam RSs transmitted from the network) may calculate/configure beam reporting information based on the configuration information and measurement values (step S1740).

In this regard, the UE may utilize/apply an AI/ML-based model, and through this, generate prediction information related to beam reporting (e.g., information on beam prediction/selection). Specifically, regarding this procedure, the UE may calculate/configure information on confidence, accuracy, probability, and the like based on the method proposed in the present disclosure (e.g., Embodiment 1, Embodiment 2, and detailed examples thereof).

The UE may apply the method proposed in the present disclosure (e.g., Embodiment 1, Embodiment 2, and detailed examples thereof) to transmit beam reporting information for the predicted/selected beams to the network (step S1750).

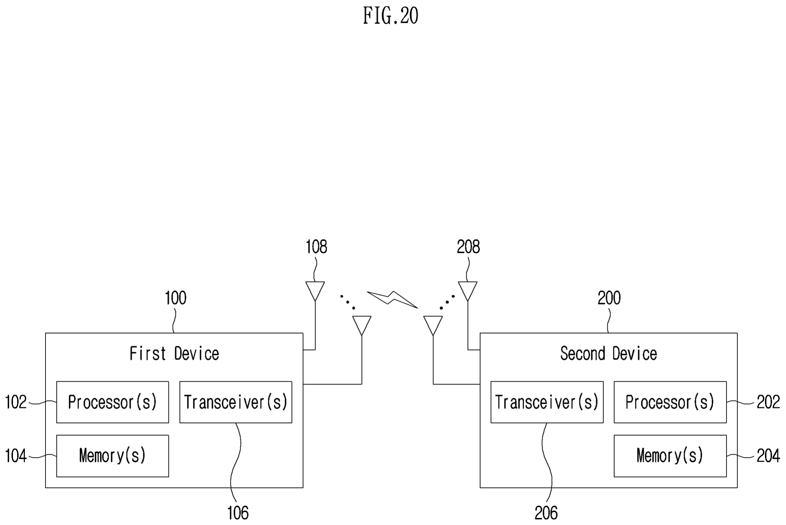

In FIG. 17, the UE/network is merely an example and may be implemented by the devices illustrated in FIG. 20 (e.g., first device, second device). For example, the processor(s) (102/202) of FIG. 20 may control the transceiver(s) (106/206) to transmit/receive channels/signals/data/information and may also control storing the transmitted or received channels/signals/data/information in the memory (104/204).

Additionally, the operations of FIG. 17 may be processed by one or more processors (102, 202) of FIG. 20, and the operations of FIG. 17 may be stored in a memory (e.g., one or more memories (104, 204) of FIG. 20) in the form of instructions/programs (e.g., instructions, executable code) for driving at least one processor (e.g., 102, 202) of FIG. 20.

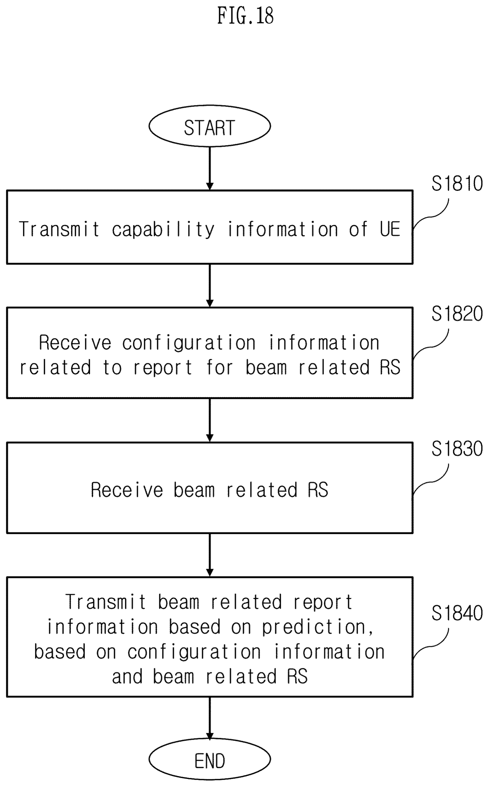

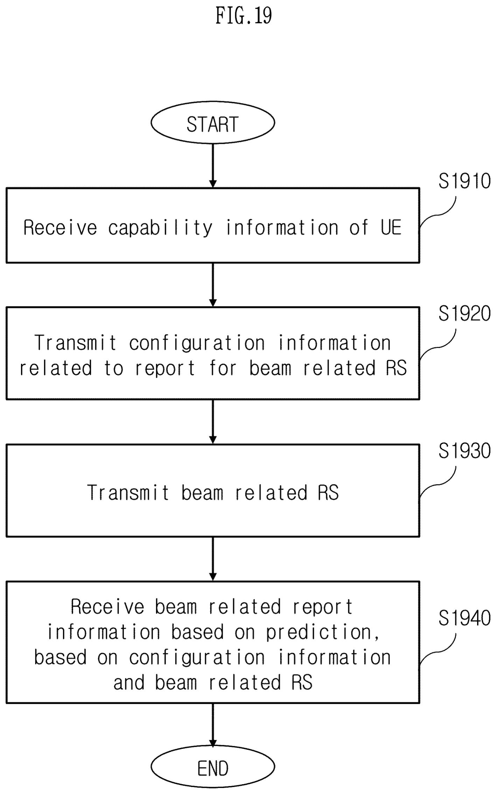

Hereinafter, operations of the UE and base station according to the examples of the present disclosure described above will be explained with reference to FIGS. 18 and 19.

FIG. 18 is a diagram illustrating the operation of a user equipment for a confidence information reporting method according to an embodiment of the present disclosure.

Referring to FIG. 18, FIG. 18 exemplifies operations of the UE based on the previously proposed methods (e.g., one or more of the proposed methods in Embodiment 1 to Embodiment 2 and detailed Embodiments thereof). The example of FIG. 18 is for ease of explanation and does not limit the scope of the present disclosure. Some of the steps illustrated in FIG. 18 may be omitted depending on the situation and/or settings. Additionally, in FIG. 18, the UE is merely an example and may be implemented by the device illustrated in FIG. 20. For example, the processor(s) (102/202) of FIG. 20 may control the transceiver(s) (106/206) to transmit/receive channels/signals/data/information, and may also control storing the transmitted or received channels/signals/data/information in the memory (104/204).

Furthermore, the operations of FIG. 18 may be processed by one or more processors (102, 202) of FIG. 20, and the operations of FIG. 18 may be stored in a memory (e.g., one or more memories (104, 204) of FIG. 20) in the form of instructions/programs (e.g., instructions, executable code) for driving at least one processor (e.g., 102, 202) of FIG. 20.

The UE may transmit its capability information to the base station (step S1810).

For example, the capability information may include information related to an AI/ML-based model (training/inference and/or functionality) of the UE and information regarding the possibility/support of beam prediction.

The UE may receive from the base station configuration information related to reporting for one or more beam-related RSs (e.g., CSI-RS, SSB, etc.) (step S1820).

For example, the configuration information may include information related to the RS(s) subject to reporting, information for time/frequency resources for reporting, information for characteristics/types of the reporting, and information for parameters/information to be included in the reporting.

The UE may receive one or more beam-related RSs from the base station (step S1830), and based on the aforementioned configuration information and one or more beam-related RSs, the UE may transmit prediction-based beam-related reporting information to the base station (step S1840).

For example, the prediction may be based on information derived from the AI/ML model using the beam-related RSs. As a specific example, the UE may be configured/defined to input beam-related RSs received from a base station into an AI/ML model to predict reporting information for beam-related RSs in different spatial resources and/or subsequent time resources.

In this regard, confidence-related information regarding the prediction (e.g., confidence, accuracy, probability, etc.) may be included in at least one of the UE capability information (e.g., step S1810) or the beam-related reporting information (e.g., step S1840) and reported/transmitted to the base station.

For example, the confidence-related information may include one or more of the first type of confidence-related information, the second type of confidence-related information, or the third type of confidence-related information. Specifically, the first type of confidence-related information may correspond to confidence-related information for at least one of the AI/ML model or the functionality based on the AI/ML model (e.g., the first-level confidence-related information described in the present disclosure). The second type of confidence-related information may correspond to confidence-related information for at least one of the measurement values for one or more beam-related RSs, input data of the AI/ML model, or beam-related reporting information (e.g., the second-level confidence-related information described in the present disclosure). The third type of confidence-related information may correspond to confidence-related information for at least one parameter included in the beam-related reporting information (e.g., the third-level confidence-related information described in the present disclosure).

With respect to the aforementioned first type of confidence-related information, the UE may include the first type of confidence-related information in the UE capability information and report/transmit it to the base station. Additionally or alternatively, when at least one of the AI/ML model or the functionality based on the AI/ML model is changed, the UE may include the first type of confidence-related information in a report regarding the change and report/transmit it to the base station. Additionally or alternatively, when reporting of the first type of confidence-related information is triggered by the base station, the UE may include the first type of confidence-related information in the (beam-related) reporting information triggered by the base station and report/transmit it to the base station.

With respect to the aforementioned second type of confidence-related information, when the UE receives from the base station information for multiple beam-related RSs that are targets of the prediction or information for the best beam-related RS among the multiple beam-related RSs, the second type of confidence-related information may be configured based on the received information. Additionally or alternatively, based on the aforementioned configuration information (e.g., step S1820), or when reporting of the second type of confidence-related information is triggered by the base station, the UE may include the second type of confidence-related information in the beam-related reporting information (e.g., step S1840) and report/transmit it to the base station.

With respect to the aforementioned third type of confidence-related information, the UE may include the third type of confidence-related information in the aforementioned beam-related reporting information (e.g., step S1840) and report/transmit it. Specifically, the third type of confidence-related information may include one or more of confidence-related information per beam-related RS (e.g., beam ID-specific confidence-related information), confidence-related information per beam-related quality value (e.g., beam quality value-specific confidence-related information), or confidence-related information per combination of beam-related RS and beam-related quality value (e.g., [beam ID, beam quality value] combination-specific confidence-related information).

Regarding reporting/transmitting the aforementioned confidence-related information, when a change in the confidence-related information for the prediction satisfies a predefined criterion, the UE may be configured to transmit the changed confidence-related information to the base station.

Additionally or alternatively, when N types of confidence-related information are pre-defined (where N is a natural number), the UE may, as part of reporting its capability information (e.g., step S1810), report/transmit to the base station information indicating at least one type among the N types of confidence-related information that is supported by the UE. In this case, the configuration information set by the base station to the UE (e.g., step S1820) may include information to configure the UE to report confidence-related information according to the aforementioned at least one type (i.e., the type reported as supported by the UE).

Additionally, the operations of the UE and/or the configuration/instruction/report-related information in FIG. 18 may be specified based on the contents described in the embodiments (e.g., Embodiment 1 and Embodiment 2 and detailed Embodiments thereof) described above in the present disclosure.

FIG. 19 is a diagram illustrating the operation of a base station for a confidence information reporting method according to an embodiment of the present disclosure.

Referring to FIG. 19, FIG. 19 exemplifies operations of the base station based on the previously proposed methods (for example, any one or more of the proposed methods in Embodiment 1 to Embodiment 2, and detailed Embodiments thereof). The example in FIG. 19 is for convenience of explanation and does not limit the scope of the present disclosure. Some of the steps exemplified in FIG. 19 may be omitted depending on the situation and/or configuration. In addition, the base station in FIG. 19 is merely an example and may be implemented by the device exemplified in FIG. 20. For example, the processor(s) (102/202) of FIG. 20 may control the transceiver(s) (106/206) to transmit and receive channels/signals/data/information, and may also control storing the transmitted or received channels/signals/data/information in the memory(ies) (104/204).

In addition, the operations of FIG. 19 may be processed by one or more processors (102, 202) of FIG. 20, and the operations of FIG. 19 may be stored in a memory (for example, one or more memories (104, 204) of FIG. 20) in the form of instructions/programs (for example, instructions, executable code) for driving at least one processor (for example, 102, 202) of FIG. 20.

The base station may receive capability information of the UE from the UE (step S1910).

For example, the capability information may include information related to an AI/ML-based model (training/inference and/or functionality) of the UE and information regarding the possibility/support of beam prediction.

The base station may transmit configuration information related to reporting for one or more beam-related RSs (e.g., CSI-RS, SSB, etc.) to the UE (step S1920).

For example, the configuration information may include information related to the RS(s) subject to reporting, information regarding time/frequency resources for reporting, information regarding the characteristics/type of reporting, and information regarding parameters/information to be included in the report.

The base station may transmit one or more beam-related RSs to the UE (step S1930). Thereafter, the base station may receive, from the UE, prediction-based beam-related report information based on the aforementioned configuration information and the one or more beam-related RSs (step S1940).

For example, the prediction may be based on information derived by the UE from an AI/ML model using the beam-related RSs. Specifically, the UE may input the beam-related RSs received from the base station into the AI/ML model, such that the model predicts report information for the beam-related RSs in different spatial resources and/or subsequent time resources.

In this regard, confidence-related information for the prediction (e.g., confidence, accuracy, probability, etc.) may be included in at least one of the UE capability information (e.g., step S1910) or the beam-related report information (e.g., step S1940) and reported/transmitted to the base station.

Specific details regarding the reporting/transmission/configuration of UE capability information and confidence-related information overlap with the description provided in FIG. 18; therefore, detailed explanation thereof is omitted in the description of FIG. 19.

Additionally, the operations of the base station and/or the information related to configuration/instruction/reporting in FIG. 19 may be concretely implemented based on the contents described in the examples of the present disclosure (e.g., Example 1 and Example 2, and detailed examples thereof)

General Device to which the Present Disclosure may be applied

FIG. 20 illustrates a block diagram of a wireless communication device according to an embodiment of the present disclosure.

In reference to FIG. 20, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device XXX, YYY of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

    transmitting, to a base station, capability information of the UE;
    receiving, from the base station, configuration information related to reporting on one or more beam-related reference signals (RS);
    receiving, from the base station, the one or more beam-related RS; and
    transmitting, to the base station, beam-related reporting information based on a prediction, based on the configuration information and the one or more beam-related RS,
    wherein confidence-related information for the prediction is included in at least one of the capability information or the beam-related reporting information.

2. The method of claim 1, wherein:
    the prediction is based on information derived from an artificial intelligence/machine learning (AI/ML) model using the one or more beam-related RS.

3. The method of claim 2, wherein:

the confidence-related information comprises one or more of a first type of confidence-related information, a second type of confidence-related information, or a third type of confidence-related information,

the first type of confidence-related information corresponds to confidence-related information for at least one of the AI/ML model or a function based on the AI/ML model,

the second type of confidence-related information corresponds to confidence-related information for at least one of a measurement value for the one or more beam-related RS, input data of the AI/ML model, or the beam-related reporting information, and

the third type of confidence-related information corresponds to confidence-related information for at least one parameter included in the beam-related reporting information.

4. The method of claim 3, wherein:
the first type of confidence-related information is included in the capability information of the UE.

5. The method of claim 3, wherein:
based on at least one of the AI/ML model or the function based on the AI/ML model being changed, the first type of confidence-related information is included in reporting on the change to the base station.

6. The method of claim 3, wherein:
based on reporting of the first type of confidence-related information being triggered by the base station, the first type of confidence-related information is included in reporting information triggered by the base station.

7. The method of claim 3, wherein:
based on the information for best beam-related RS among a plurality of beam-related RSs that are the target of the prediction or the plurality of beam-related RSs, received from the base station, the second type of confidence-related information is configured based on the information.

8. The method of claim 3, wherein:
based on the configuration information or reporting of the second type of reliability-related information being triggered by the base station, the second type of confidence-related information is included in the beam-related reporting information.

9. The method of claim 3, wherein:

the third type of confidence-related information is included in the beam-related reporting information, and
the third type of confidence-related information comprises one or more of confidence-related information on a beam-related RS unit, confidence-related information on a beam-related quality value unit, or confidence-related information on a combination unit of a beam-related RS and a beam-related quality value.

10. The method of claim 1, further comprising:
transmitting, to the base station, changed confidence-related information based on a change of confidence-related information for the prediction satisfying a predefined criterion.

11. The method of claim 1, wherein:
based on N types of confidence-related information being predefined (where N is a natural number), the capability information includes information for at least one type that is supportable by the UE among the N types of confidence-related information.

12. The method of claim 11, wherein:
the configuration information includes information for configuring the UE to report confidence-related information according to the at least one type.

13. A user equipment (UE) operating in a wireless communication system, the UE comprising:

at least one transceiver for transmitting and receiving a wireless signal; and
at least one processor for controlling the at least one transceiver,
wherein the at least one processor configured to:

transmit, to a base station, capability information of the UE;

receive, from the base station, configuration information related to reporting on one or more beam-related reference signals (RS);

receive, from the base station, the one or more beam-related RS; and

transmit, to the base station, beam-related reporting information based on a prediction, based on the configuration information and the one or more beam-related RS,

wherein confidence-related information for the prediction is included in at least one of the capability information or the beam-related reporting information.

14. At least one non-transitory computer-readable medium storing at least one instruction, wherein the at least one instruction executable by at least one processor controls a user equipment (UE) to:

transmit, to a base station, capability information of the UE;

receive, from the base station, configuration information related to reporting on one or more beam-related reference signals (RS);

receive, from the base station, the one or more beam-related RS; and

transmit, to the base station, beam-related reporting information based on a prediction, based on the configuration information and the one or more beam-related RS,

wherein confidence-related information for the prediction is included in at least one of the capability information or the beam-related reporting information.

15. A processing apparatus configured to control a user equipment (UE) in a wireless communication system, the processing apparatus comprising:

at least one processor; and

at least one computer memory operably connected to the at least one processor and storing instructions that, based on being executed by the at least one processor, perform operations comprising:

transmitting, to a base station, capability information of the UE;

receiving, from the base station, configuration information related to reporting on one or more beam-related reference signals (RS);

receiving, from the base station, the one or more beam-related RS; and

transmitting, to the base station, beam-related reporting information based on a prediction, based on the configuration information and the one or more beam-related RS,

wherein confidence-related information for the prediction is included in at least one of the capability information or the beam-related reporting information.

16. A method performed by a base station in a wireless communication system, the method comprising:

receiving, from a user equipment (UE), capability information of the UE;

transmitting, to the UE, configuration information related to reporting on one or more beam-related reference signals (RS);

transmitting, to the UE, the one or more beam-related RS; and

receiving, from the UE, beam-related reporting information based on a prediction, based on the configuration information and the one or more beam-related RS,

wherein confidence-related information for the prediction is included in at least one of the capability information or the beam-related reporting information.

17. A base station operating in a wireless communication system, the base station comprising:

at least one transceiver for transmitting and receiving a wireless signal; and

at least one processor for controlling the at least one transceiver,

wherein the at least one processor configured to:

receive, from a user equipment (UE), capability information of the UE;

transmit, to the UE, configuration information related to reporting on one or more beam-related reference signals (RS);

transmit, to the UE, the one or more beam-related RS; and

receive, from the UE, beam-related reporting information based on a prediction, based on the configuration information and the one or more beam-related RS,

wherein confidence-related information for the prediction is included in at least one of the capability information or the beam-related reporting information.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

FIG.4

# FIG.5

Resource grid

A carrier
(up to 3300 subcarriers, i,e.,275 RBs)

A BWP

1 RB=12 subcarrier

1 RE

1 subcarrier

1 Symbol

k=0

l=0 ......

FIG.6

FIG.7

FIG.8

FIG.9

FIG.10

Input image
36×36

4 feature maps

28×28

14×14

Convolution
(kernel:9×9×1)

Max pooling

FIG.11

W          V

$x_1$          h1          $x'_1$

$x_2$          h2          $x'_2$

$x_3$                      $x'_3$

Encoder      Decoder

Loss function: $\underset{W,V}{\operatorname{argmin}} \| x - g(f(x)) \|^2$ ,
where h = f(x) = Wx, x' = g(h) = Vh

FIG.12

FIG.13

End device partition
(partial AI operation/model)

Network partition
(partial AI operation/model)

Actor

Intermediate
data

Inference
outputs

End device

Network AI end device

FIG.14

UE    RAN node 1    RAN node 2    Network node

1. Training data

1. Training data

2. Model training

3. Model deployment/update

4. Inference data

4. Inference data

5. Model inference

6. Model performance feedback

7. Action

8. Feedback

8. Feedback

FIG.15

UE    RAN node 1    RAN node 2

1. Training data

1. Training data

2. Model training

3. Inference data

3. Inference data

4. Model inference

5. Action

6. Feedback

## FIG.16

FIG.17

# FIG.18

```
        START
          │
          ▼
┌─────────────────────────────────────┐  S1810
│ Transmit capability information of UE│
└─────────────────────────────────────┘
          │
          ▼
┌─────────────────────────────────────┐  S1820
│   Receive configuration information  │
│ related to report for beam related RS│
└─────────────────────────────────────┘
          │
          ▼
┌─────────────────────────────────────┐  S1830
│                                      │
│        Receive beam related RS       │
│                                      │
└─────────────────────────────────────┘
          │
          ▼
┌─────────────────────────────────────┐
│     Transmit beam related report     │  S1840
│    information based on prediction,   │
│  based on configuration information  │
│        and beam related RS           │
└─────────────────────────────────────┘
          │
          ▼
         END
```

FIG.19

START

Receive capability information of UE — S1910

Transmit configuration information related to report for beam related RS — S1920

Transmit beam related RS — S1930

Receive beam related report information based on prediction, based on configuration information and beam related RS — S1940

END

FIG.20

## INTERNATIONAL SEARCH REPORT

| International application No. |
|---|
| **PCT/KR2024/004165** |

**A. CLASSIFICATION OF SUBJECT MATTER**

**H04B 7/0417**(2017.01)i; **H04B 7/06**(2006.01)i; **H04B 17/318**(2015.01)i; **H04B 17/336**(2015.01)i; **H04W 8/24**(2009.01)i; **H04W 24/08**(2009.01)i; **H04W 24/10**(2009.01)i; **H04L 5/00**(2006.01)i; **G06N 20/00**(2019.01)i

According to International Patent Classification (IPC) or to both national classification and IPC

**B. FIELDS SEARCHED**

Minimum documentation searched (classification system followed by classification symbols)

H04B 7/0417(2017.01); H04B 7/06(2006.01); H04B 7/08(2006.01); H04W 24/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UE 능력 정보(capability information), 빔(beam), 보고(report), 예측(prediction), 인공지능/머신러닝(AI/ML), 신뢰성(reliability)

**C. DOCUMENTS CONSIDERED TO BE RELEVANT**

| Category* | Citation of document, with indication, where appropriate, of the relevant passages | Relevant to claim No. |
|---|---|---|
| Y<br>A | MODERATOR (QUALCOMM). Summary#3 of General Aspects of AI/ML Framework. R1-2301865, 3GPP TSG-RAN WG1 Meeting #112. Athens, Greece. 02 March 2023.<br>See pages 46, 50 and 83. | 1-2,10,13-17<br>3-9,11-12 |
| Y | ERICSSON. Discussion on AI Beam Management. R1-2203284, 3GPP TSG-RAN WG1 Meeting #109-e. [Online]. 29 April 2022.<br>See sections 2-3. | 1-2,10,13-17 |
| A | NOKIA et al. Potential impacts due to the use case specific aspects. R2-2212939, 3GPP TSG-RAN WG2 Meeting #120. Toulouse, France. 04 November 2022.<br>See sections 2.2-5. | 1-17 |
| A | WO 2023-287086 A1 (LG ELECTRONICS INC.) 19 January 2023 (2023-01-19)<br>See paragraphs [0011]-[0033] and [0476]-[0566]; and figures 26-30. | 1-17 |
| A | US 2021-0336683 A1 (QUALCOMM INCORPORATED) 28 October 2021 (2021-10-28)<br>See paragraphs [0073]-[0076]; and figure 6. | 1-17 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 July 2024** | **16 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/004165**

| Patent document cited in search report | | | Publication date (day/month/year) | Patent family member(s) | | | Publication date (day/month/year) |
|---|---|---|---|---|---|---|---|
| WO | 2023-287086 | A1 | 19 January 2023 | EP | 4373002 | A1 | 22 May 2024 |
| | | | | KR | 10-2024-0036036 | A | 19 March 2024 |
| US | 2021-0336683 | A1 | 28 October 2021 | CN | 115398823 | A | 25 November 2022 |
| | | | | EP | 4140056 | A1 | 01 March 2023 |
| | | | | US | 11677454 | B2 | 13 June 2023 |
| | | | | WO | 2021-216977 | A1 | 28 October 2021 |

Form PCT/ISA/210 (patent family annex) (July 2022)